Europäisches Patentamt

European Patent Office

. Office européen des brevets

(11) Publication number: **0 113 453**
**B1**

# EUROPEAN PATENT SPECIFICATION

(45) Date of publication of patent specification: **20.08.86**

(51) Int. Cl.⁴: **G 01 M 11/00**

(21) Application number: **83112497.9**

(22) Date of filing: **12.12.83**

(54) **Method of measuring the cutoff wavelength of the first higher order mode in optical fibres.**

(30) Priority: **14.12.82 IT 6846782**

(43) Date of publication of application:
**18.07.84 Bulletin 84/29**

(45) Publication of the grant of the patent:
**20.08.86 Bulletin 86/34**

(84) Designated Contracting States:
**DE FR GB NL**

(56) References cited:

ELECTRONICS LETTERS, vol. 17, no. 25/26,
December 1981, London F. ALARD et al.

"Fundamental mode spot-size measurement in
single-mode optical fibres", pages 958-960
ELECTRONICS LETTERS, vol. 16, no. 20,
September 1980, Hitchin K. OKAMOTO et al.

"Polarisation characteristics in long length
v.a.d. single-mode fibres", pages 768-769

ELECTRONICS LETTERS, vol. 16, no. 20,
September 1980, Hitchin

(73) Proprietor: **CSELT Centro Studi e Laboratori
Telecomunicazioni S.p.A.
Via Guglielmo Reiss Romoli, 274
I-10148 Turin (IT)**

(72) Inventor: **Coppa, Gianni
Viale alla Vittoria, 40
Asti (IT)**
Inventor: **Di Vita, Pietro
C.so Francia, 357
Turin (IT)**

(74) Representative: **Riederer Freiherr von Paar zu
Schönau, Anton et al
Freyung 615 Postfach 2664
D-8300 Landshut (DE)**

(56) References cited:
ELECTRONICS LETTERS, vol. 16, no. 18,
August 1980, Hitchin V.A. BHAGAVATULA et
al. "Refracted power technique for cutoff
wavelength measurement in single-mode
waveguides", pages 695, 696

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to optical fibres for use in telecommunications and in particular it concerns a method of measuring the cutoff wavelength of the first higher-order mode in an optical fibre, in which method light is emitted by a source and is sent into the fibre and is collected at the output of the fibre by a photodetector. Nowadays in telecommunications single-mode fibres (that is fibres capable of propagating a single mode or electromagnetic field configuration, i.e. the fundamental mode) are more and more used, as they present low attenuation and high capacity as to the information transmissible in the time unit. These advantages hold good as long as the fibre is a single-mode fibre. It is known that propagation characteristics and the number of modes guided in a fibre strictly depend on the so-called normalized frequency V, which depends on radius $a$ of the fibre core, on maximum numerical aperture $\Delta$ and on operating wavelength $\lambda$ according to the relation

$$V = \frac{2\pi a \Delta}{\lambda}.$$

In particular, a value $V_o$ exists above which (and as a consequence a wavelength $\lambda_0$ exists under which) the fibre does no longer behave as a single-mode fibre, because under those conditions, other modes besides the fundamental one can propagate. Then the interest of an accurate knowledge of $V_0$ or $\lambda_0$ is evident. The value of $\lambda_0$ could be derived from the knowledge of the value of $V_0$, which can be in turn determined from the fibre refractive-index profile.

However, the accurate determination of the refractive-index profile is an operation requiring highly sophisticated measurements, that is why a direct measurement of $\lambda_0$ is at present preferred.

Different methods of effecting said direct measurement have been suggested.

A first method has been described in Y. Katsuyama, M. Tokuda, N. Uchida, M. Nakahara in the paper "New method for measuring V-value of a single mode optical fibre", Electronics Letters 9 December 1976, vol. 12, N. 25, pages 669—670. According to this method the wavelength $\lambda_0$ is obtained by spectral attenuation measurements, i.e. by measuring the power outgoing from two fibre trunks of different lengths (a short and a long one) at different wavelengths and by correlating the results.

The cutoff wavelength of the various modes is shown by peaks which are not due to the presence of impurities. That method requires a number of measurements for each fibre trunk and besides it gives rather inaccurate results, owing to the width of the peak relating to the first higher-order mode.

A second method has been suggested by Y. Murakami, A. Kawana, H. Tsuchiya in the article "Cutoff wavelength measurements for single-mode optical fibre", Applied Optics, vol. 18, N. 7, 1 April 1979, pages 1101—1105. This method is based on the near-field intensity measurements at different wavelengths at the wavelength from which the first higher-order mode starts to propagate, the near field intensity shows a central depression due to its different radial power distribution. Although this method is more accurate than the preceding one, it is certainly more complex as it requires a plurality of sophisticated near-field measurements (in particular a radial scanning for each wavelength used in the measurement).

According to a third method, described by S. Masuda, T. Iwama and Y. Daido in the article "Nondestructive measurements of core radius, numerical aperture, and cutoff wavelength for single-mode fibres". Applied Optics, 1 December, 1981, vol. 80, N. 23, pages 4035—4038, the cutoff wavelength is obtained by measuring, at different wavelengths, the splicing losses between two fibre trunks, which losses decrease in correspondence of the first higher-order mode. Also this method requires a plurality of measurement series and the use of different fibre trunks.

The foregoing and other disadvantages are to be overcome by the method provided by the present invention which is characterized in that linearly-polarized light with wavelengths in a range comprising said cutoff wavelength is sent into the fibre and then made to pass through an analyser which is crossed with the polarization axis of the fundamental mode so as to eliminate the contribution thereof in the light collected down-stream of the analyser by the photodetector, and in that a spectral scanning of the intensity of the output signal of the photodetector is effected over said wavelength range and the vanishing of said output signal is detected, said vanishing occurring in correspondence with the cutoff wavelength.

This method allows $\lambda_0$ to be directly determined by a single series of measurements and without necessity of complicated processings. Such method exploits the characteristic that in optical-fibre transmission the fundamental mode maintains the linear polarization, while higher-order modes have non-linear polarization. Consequently, by launching polarized light into the fibre and analysing the light at the output with an orthogonal polarizer, the whole light guided by the fundamental mode is eliminated at a down-stream receiver; thus, if the fibre is a single-mode fibre, the detector output power is zero whereas if the fibre is multimode, the output will be different from 0. Cutoff wavelength $\lambda_0$ will be identified as the wavelength below which the receiver output power is not zero.

It is to be taken in mind that two fundamental modes polarized according to two orthogonal axes exist in the fibre. Generally they are degenerated and behave as a single mode, but in presence of imperfections such degeneration is no longer present. Consequently, light polarized in the same direction as one of the two modes is launched into the fibre, because otherwise the light outgoing from the fibre would be elliptically polarized and the various modes could no longer be selected by the analyser, and can easily be obtained, in an initialization phase, by sending light at a wavelength at which the fibre is positively a single-mode fibre and by rotating the polarizer and the analyser till there is no more light at the output.

A measuring arrangement using a polarizer before the optical fibre and an analyser behind the optical fibre is known per se (Electronics Letters, vol. 16. No. 20. September 1980, Okamoto et al: Polarization characteristics in long length v.a.d. single-mode fibres'', pages 768—679). In this prior art, the polarization characteristics of the fibre are investigated in view of the fibre applicability to polarization sensitive optical devices, the measuring method using a wavelength where the fibre is positively monomode and the behaviour thereof at different polarization angles being tested.

The invention will be better understood with reference to the annexed drawings, in which:

Figure 1 is a schematic representation of an apparatus for carrying out the method according to the invention, and

Figure 2 shows the behaviour of the signals outgoing from the detector.

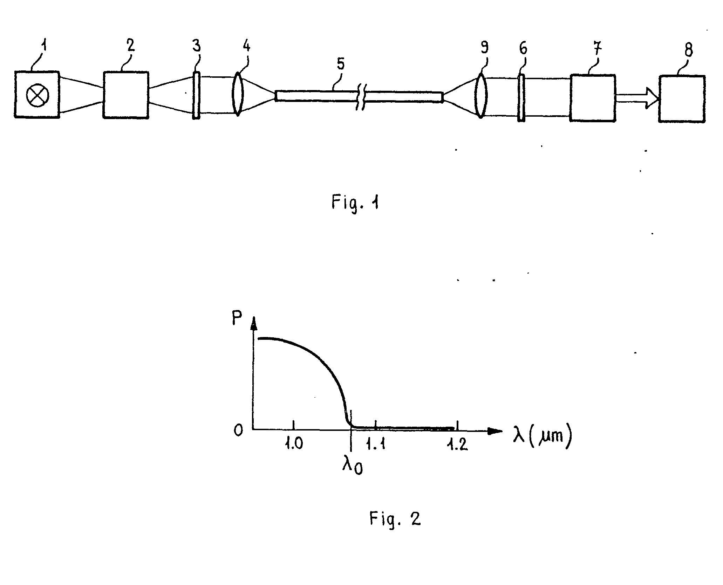

As shown in Figure 1, a source 1 of light comprising radiations at the wavelength usually used for optical-fibre transmission, illuminates a monochromator 2 or another similar device which allows monochromatic radiations at different wavelengths to be isolated.

Monochromator 2 is followed by a polarizer 3, which linearly polarizes the light emitted by the monochromator, and by an optical system 4 which focuses the polarized light at one end of a trunk 5 (which may be some decimeters long) of the fibre whose $\lambda_0$ is to be determined.

An optical system 9 which focuses the light outgoing from the fibre on an analyser 6, crossed with respect to polariser 3, is placed at the other fibre end; the analyser is followed by a photodetector 7, connected with means 8 for determining the power of the electrical signal outgoing from photodetector and for the possible visualization of such power in function of the wavelength.

The measurement of $\lambda_0$ is effected by such apparatus as follows; the radiations at different wavelengths are separated by monochromator 2, and after having been linearly polarized, these radiations are sent into fibre 5 and collected through analyser 6 and photodetector 7. For each said wavelength, the output power of photodetector 7 is measured.

As long as the wavelength of the radiation launched into the fibre is shorter than cutoff wavelength $\lambda_0$, the fibre behaves as a multimode fibre, and hence the light outgoing from the fibre has not maintained linear polarization.

Thus the light passes through analyser 6 and reaches photodetector 7, whose output signal is different from 0. When the radiation wavelength exceeds $\lambda_0$, the fibre behaves as a single-mode fibre; since the light transmitted in the fundamental mode is linearly polarized, it is eliminated by analyser 6 and the output signal of the photodetector is zero. By duly choosing monochromator 2, the precise wavelength at which the output signal becomes zero, that is cutoff wavelength, can be easily detected.

Figure 2 is a power-versus-wavelength diagram for a typical fibre; the ordinate values are not given as they obviously depend on the power of source 1.

Of course, when launching the light into the fibre, care must be taken that the distribution of the light at the fibre input surface be sufficiently non-uniform in order to ensure an acceptable excitation of the first higher-order mode.

It is also to be appreciated that small imperfections of fibre 5 may cause propagation therein of two fundamental modes, which are linearly polarized according to two orthogonal axes. Hence care must be taken to launch into the fibre light polarized in the same direction as one of said two modes; this can be obtained by a convenient orientation of polarizer 3 and analyser 6, which are to be mounted onto supports (not shown) allowing their rotation. More particularly the orientation desired for the polarizer and the analyser can be determined before starting the actual measurements, by selecting with monochromator 2 a wavelength at which the fibre positively behaves as a single-mode fibre, and rotating analyser and polarizer till a position is found in which the signal outgoing from the photodetector is zero. The measurements at different wavelengths will then be effected by leaving the polarizer and analyzer in that position.

It is also to be mentioned that with the fibres generally used in telecommunications and with the trunk length considered there is no danger of optical power conversion between the two fundamental modes.

**Claims**

1. Method of measuring the cutoff wavelength of the first higher-order mode in an optical fibre (5), in which method light is emitted by a source (1) and is sent into the fibre and is collected at the output of the fibre by a photodetector (7), characterized in that linearly polarized light with wavelengths in a range comprising said cutoff wavelength is sent into the fibre (5) and then made to pass through an analyser (6) which is crossed with the polarization axis of the fundamental mode so as to eliminate the contribution thereof in the light collected down-stream of the analyser (6) by the photodetector (7), and in that a spectral scanning of the intensity of the output signal of the photodetector (7) is effected over said wavelength range and the vanishing of said output signal is detected, said vanishing occurring in correspondence with the cutoff wavelength.

2. Method according to Claim 1, characterized in that, prior to the polarization different wavelengths are selected from the light emitted by the source (1) and are individually sent into the fibre.

3. Method according to Claim 1 or 2, characterized in that for fibres presenting two fundamental propagation modes, which are linearly polarized according to perpendicular axes, radiations with the same polarization axis as one of the two fundamental modes are sent into the fibre under test.

## Patentansprüche

1. Verfahren zum Messen der Grenzwellenlänge des Modus erster höherer Ordnung in einer optischen Faser (5), wobei Licht von einer Quelle (1) abgegeben und in die Faser geleitet wird und am Ausgang der Faser durch einen Fotodetektor (7) aufgenommen wird, dadurch gekkenzeichnet, daß man linear polarisiertes Licht mit Wellenlängen in einem Bereich, der die Grenzwellenlänge umfaßt, in die Faser (5) und dann durch einen Analysator (6) leitet, der zur Polarisationsachse des Grundmodus gekreuzt ist, so daß dessen Beitrag zum dem hinter dem Analysator (6) vom Fotodetektor (7) aufgenommenen Licht eliminiert ist, und daß man über diesen Wellenlängenbereich eine spektrale Abtastung der Stärke des Ausgangssignals des Fotodetektors (7) durchführt und das Verschwinden des Ausgangssignals feststellt, wobei dieses Verschwinden in Übereinstimmung mit der Grenzwellenlänge stattfindet.

2. Verfahren nach Anspruch 1, dadurch gekennzeichnet, daß man vor der Polarisation aus dem von der Quelle (1) abgegebenen Licht verschiedene Wellenlängen auswählt und sie einzeln in die Faser leitet.

3. Verfahren nach Anspruch 1 oder 2, dadurch gekennzeichnet, daß man für Fasern mit zwei Grund-Fortschreitungsmoden, die entsprechend aufeinander senkrechten Achsen linear polarisiert sind, Strahlungen mit der selben Polarisationsachse wie einer der beiden Grundmoden in die getestete Faser sendet.

## Revendications

1. Méthode de mesure de la longueur d'onde critique du premier mode d'ordre supérieur dans une fibre optique (5), selon lequel on envoie dans la fibre la lumière émise par une source (1) et on la récueillit à la sortie de la fibre par un photodétecteur (7), caractérisée en ce qu'on envoie dans la fibre (5) de la lumière polarisée rectilignement avec des longueurs d'onde dans un intervalle comprenant cette longueur d'onde critique et on la fait passer en suite à travers un analyseur (6) croisé avec l'axe de polarisation du mode fondamental de façon à éliminer la contribution de ce mode dans la lumière récueille par le photodétecteur (7) en aval de l'analyseur (6), et en ce qu'on effectue un balayage spectral, sur cet intervalle de longueurs d'onde, de l'intensité du signal de sortie du photodétecteur (7) et on reconnait la disparition de ce signal de sortie, cette disparition ayant lieu en correspondance de la longueur d'onde critique.

2. Méthode selon la revendication 1, caractérisée en ce que, avant la polarisation, on choisit des longueurs d'onde différentes dans la lumière émise par la source (1), et on les envoie individuellement dans la fibre.

3. Méthode selon la revendication 1 ou 2, caractérisée en ce que, pour des fibres qui présentent deux modes fondamentaux de propagation, polarisés rectilignement suivant des axes perpendiculaires, on envoir dans la fibre examinée des radiations ayant le même axe de polarisation qu'un des modes fondamentaux.

Fig. 1

Fig. 2